# DEMANDE DE BREVET EUROPEEN

(11) **EP 1 303 119 A1**
(43) Date de publication de la demande: **16.04.2003**
(21) Numéro de dépôt: 02292435.1
(22) Date de dépôt: 03.10.2002
(51) Int. Cl.: H04M 7/00, H04M 11/06, H04N 1/00

(54) **Noeud de relayage de signaux de télécommunication**

(30) Priorité: 12.10.2001 FR 0113187
(71) Demandeur: ALCATEL, 75008 Paris (FR)
(72) Inventeur: Naudot, Gildas, 37000 Tours (FR); Moulehiawy, Abdelkrim, 75002 Paris (FR); Volpe, Giovanni, 92110 Clichy (FR)
(74) Mandataire: Sciaux, Edmond

(57) **Abrégé**

Ce noeud de relayage est destiné à coupler des terminaux de téléphone, de télécopieur, ou de données à un réseau de télécommunication par paquets de données numériques. II comporte :
- un discriminateur de signal (2) pour déterminer le type d'un signal provenant d'un terminal couplé à ce noeud, parmi une pluralité de types ;
- et une pluralité de moyens logiciels de relayage (3-6) destinés à traiter respectivement chacun un type de signal, et commandés par le discriminateur (2) de façon à appliquer à chaque signal un traitement de relayage correspondant au type de ce signal.

## Description

L'invention concerne un noeud de relayage de signaux de télécommunication. Un tel noeud est utilisé à la périphérie d'un réseau de télécommunication numérique, notamment un réseau de transmission par paquets conformes au protocole Internet ou relayage de trames. Différents types de terminal peuvent être reliés à un tel noeud, au moyen d'une ligne téléphonique classique, analogique ou numérique :
- un téléphone ;
- ou un télécopieur ;
- ou un modem.

Un noeud de relayage convertit le signal de téléphone, de télécopieur, ou de données fourni par chaque terminal pour mettre ce signal sous la forme de paquets de données adaptés au réseau de télécommunication. Mais la conversion n'est pas réalisée selon un procédé unique, le procédé doit adapté à chaque type de signal. Un noeud de relayage traite en parallèle une pluralité de signaux correspondant à une pluralité de terminaux. Par exemple, pour établir une communication vocale à partir d'un terminal téléphonique analogique, à travers un réseau utilisant le protocole Internet, il faut échantillonner, numériser, et comprimer le signal fourni par le terminal téléphonique ; et réaliser les fonctions inverses pour l'autre sens de la communication. Les fonctions de relayage pour la télécopie ou pour la transmission de données via un modem sont différentes parce qu'on utilise alors d'autres procédés de transmission spécialement optimisés pour ce type de signal. Le noeud de relayage doit donc choisir convenablement un procédé de relayage pour chaque terminal qui établit une communication.

Il est connu d'assigner, de manière fixe, un type de terminal à chaque ligne téléphonique qui est reliée au noeud. En pratique, cela consiste à prévoir un paramètre de configuration dédié au type de terminal, pour chaque port du noeud. Le noeud peut ainsi être programmé à l'avance pour appliquer les procédés de relayage qui sont respectivement appropriés pour chaque ligne. Cette façon de discriminer le type de terminal n'est pas pratique car elle manque de souplesse. Il n'est pas possible de brancher n'importe quel terminal sur n'importe quelle ligne sans modifier la valeur des paramètres de configuration des ports du noeud. En particulier, il n'est pas possible de brancher un téléphone et un télécopieur sur une même ligne, en vue de les utiliser alternativement. Il n'est pas possible non plus d'utiliser un terminal multifonction (Un téléphone télécopieur, par exemple).

Le but de l'invention est de remédier à cet inconvénient.

L'objet de l'invention est un noeud de relayage pour coupler des terminaux à un réseau de télécommunication par paquets de données numériques ; caractérisé en ce qu'il comporte :
- des moyens pour déterminer le type d'un signal provenant d'un terminal couplé à ce noeud, parmi une pluralité de types de signal ;
- et une pluralité de moyens de relayage destinés à traiter respectivement chacun un type de signal, et commandés par les moyens pour déterminer le type d'un signal, de façon à appliquer à chaque signal un traitement de relayage correspondant au type de ce signal.

Le noeud ainsi caractérisé permet d'adapter automatiquement le procédé de relayage au type de terminal qui est branché sur une ligne relié à ce noeud, parce qu'il comporte des moyens déterminant le type de terminal en déterminant le type les signaux qu'il émet, notamment pendant la phase d'établissement de la communication ; et que ces moyens activent des moyens de relayage appropriés respectivement pour chaque signal.

L'invention sera mieux comprise et d'autres caractéristiques apparaîtront à l'aide de la description ci-dessous et des figures l'accompagnant :
- La figure 1 représente le schéma synoptique d'un exemple de réalisation du noeud de relayage selon l'invention ;
- La figure 2 représente le schéma synoptique d'un exemple de réalisation du dispositif discriminateur de type de signal, que comporte cet exemple de réalisation

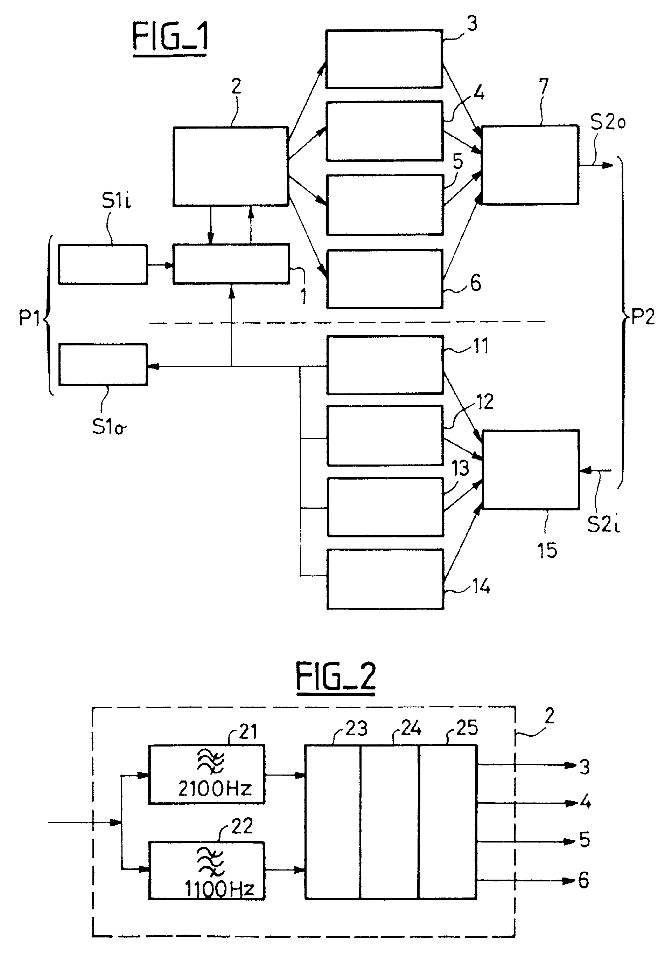

L'exemple de réalisation représenté sur la **figure 1,** comporte :
- un port P1 relié à un terminal (non représenté) par une ligne (non représentée), ce terminal pouvant être un téléphone, un télécopieur, ou un modem; ce port P1 recevant un signal numérique d'entrée S1i fourni directement par le terminal si c'est un terminal numérique, ou fourni par un convertisseur analogique-numérique placé en amont du port P1 si c'est une ligne analogique ;
- un port P2 relié à un réseau numérique (non représenté) de transmission de données par paquets, par une ligne numérique (non représentée), ce réseau utilisant par exemple le protocole Internet ;
- un annuleur d'écho 1 recevant le signal numérique d'entrée S1i arrivant sur le port P1, et un signal S1o qui est fourni par le noeud au terminal via le port P1 ; ce port P1 fournissant un signal numérique S1o directement au terminal si c'est un terminal numérique, ou fournissant le signal S1o à un convertisseur numérique-analogique (non représenté) placé en aval du port P1 si c'est une ligne analogique ;
- un discriminateur de type de signal, 2, ayant :
   -- une entrée reliée à une sortie de l'annuleur d'écho 1,
   -- une première sortie reliée à une entrée d'inhibition de l'annuleur d'écho 1,
   -- une deuxième, troisième, quatrième, et cinquième sorties, telles qu'une seule de ces sorties fournit un signal, cette sortie étant fonction du type du signal émis par le terminal : une tonalité, ou un signal de voix, ou un signal de silence, ou un signal de télécopieur, ou un signal de modem ;
- un dispositif 3 de relayage pour des tonalités dites DTMF (Dual tone Multi Frequency), fonctionnant pendant toute la durée d'une communication ; ce dispositif 3 ayant une entrée reliée à la deuxième sortie du discriminateur 2;
- un dispositif 4 de relayage pour un signal de silence, ayant une entrée reliée à la troisième sortie du discriminateur 2 ;
- un dispositif 5 de relayage pour un signal vocal, ayant une entrée reliée à la quatrième sortie du discriminateur 2 (pendant une communication vocale ) ;
- un dispositif 6 de relayage pour un signal de télécopie ou modem (pendant une communication de type télécopie ou transmission de fichier), ayant une entrée reliée à la cinquième sortie du discriminateur 2 ;
- un dispositif 7 de mise en paquets, ayant quatre entrées reliées respectivement aux sorties de chacun des dispositifs de relayage 3 à 6 , et ayant une sortie fournissant une suite de paquets de données au port P2 ;
- un dispositif 15 de décomposition de paquets, ayant une entrée recevant une suite de paquets S2i que le réseau fournit au port P2, et ayant une première, une deuxième, une troisième, et une quatrième sorties fournissant respectivement (selon le cas) une tonalité, ou un signal de voix, ou un signal de silence, ou un signal de télécopieur, ou un signal de modem, extrait de la suite paquets reçue ;
- un modulateur de type télécopie, 11, ayant une entrée reliée à la première sortie du dispositif 15 de décomposition, et ayant une sortie reliée au port P1 pour fournir un signal de type télécopie au terminal (pendant une communication de type télécopie);
- un décodeur de voix, 12, ayant une entrée reliée à la deuxième sortie du dispositif 15 de décomposition, et ayant une sortie reliée au port P1 pour fournir un signal de type vocal au terminal (pendant une communication vocale) ;
- un générateur de bruit de confort, 13, ayant une entrée reliée à la deuxième sortie du dispositif 15 de décomposition, et ayant une sortie reliée au port P1 pour fournir un signal de bruit au terminal (pendant les périodes de silence d'une communication téléphonique) ;
- et un générateur 14 de tonalités dites DTMF (Dual tone Multi Frequency) ayant une entrée reliée à la quatrième sortie du dispositif 15 de décomposition, et ayant une sortie reliée au port P1, pour fournir un signal de signalisation au terminal (pendant les périodes de signalisation d'une communication téléphonique).

Le dispositif 2 discriminateur de signal sélectionne le procédé de relayage, à appliquer au signal émis par le terminal, en aiguillant ce signal vers un seul des dispositifs de relayage 3 à 6. En outre, il inhibe l'annuleur d'écho 1 pendant une communication de télécopieur.

Selon un mode de réalisation préférentiel, l'ensemble des composants décrits ci-dessus est réalisé au moyen d'un processeur de signal convenablement programmé. En particulier, les dispositifs 3-6, et 11-14 sont constitués préférentiellement de moyens logiciels.

La **figure 2** représente le schéma synoptique d'un exemple de réalisation du dispositif 2 discriminateur de type de signal. Il comporte :
- deux filtres passe-bande 21 et 22 centrés respectivement sur les fréquences 2100Hz et 1100Hz, et ayant chacun une entrée reliée à l'entrée du dispositif 2 ;
- un dispositif 23 de discrimination entre : une tonalité à 2100Hz, une tonalité à 1100Hz, un silence (toujours plus ou moins affecté par du bruit), ou un signal autre (notamment de la voix) ;
- un dispositif 24 d'analyse de signaux, qui détermine si une impulsion de tonalité a une durée comprise dans un intervalle prédéterminé, pour vérifier si c'est une des tonalités attendues par le noeud ; ou qui analyse une tonalité à 2100 Hz pour détecter la présence ou l'absence d'une modulation d'amplitude à 15 Hz, et pour détecter des sauts de phase de ± 180°;
- et un dispositif de décision, 25, qui détermine le type du signal en fonction de l'amplitude du signal en sortie des filtres 21 et 22, et en fonction du résultat de l'analyse effectuée par le dispositif 24 ; le dispositif 25 ayant quatre sorties constituant les quatre sorties du dispositif 2, pour restituer le signal d'entrée sur la sortie qui correspond au type de signal déterminé.

Les signaux de type télécopie et modem répondent à des normes connues (ITU-T V.8, V.25, V21). Ils sont reconnus par les dispositifs 23 et 24 qui sont programmés pour reconnaître les caractéristiques définies par ces normes. Ces signaux sont alors aiguillés par le dispositif 25 vers le dispositif 6 de relayage pour un signal de télécopie ou modem.

Les signaux vocaux sont aiguillés vers le dispositif 5 de relayage de signal vocal pour réaliser une compression selon l'un des protocoles normalisé de compression (ITU-T G.711, G.723, G.726, G.729) choisi selon la configuration du canal de transmission à travers le réseau. Ces algorithmes de compression de parole sont les plus couramment utilisés dans les système permettant le transport de la voix sur les réseaux en mode paquet (IP, Frame relay, ATM, ...).

La détection de silence permet d'interrompre momentanément le codage dans le but de réduire le débit des données compressées. Le dispositif 4 analyseur de bruit de confort analyse le bruit ambiant dans le signal, et fournit à l'appareil distant les caractéristiques de ce bruit pour générer un bruit de confort. L'activation de cette fonction est configurable par canal ainsi que le niveau de détection du silence.

Il est à la portée de l'Homme de l'Art d'adapter le noeud selon l'invention pour discriminer et relayer tout autre type de signal qui pourrait être transporté à l'avenir, par exemple un signal video.

## Revendications

1. Noeud de relayage pour coupler des terminaux à un réseau de télécommunication par paquets de données numériques ; **caractérisé en ce qu'**il comporte :
- des moyens (2) pour déterminer le type d'un signal provenant d'un terminal couplé à ce noeud, parmi une pluralité de types de signal ;
- et une pluralité de moyens de relayage (3-6) destinés à traiter respectivement chacun un type de signal, et commandés par les moyens (2) pour déterminer le type d'un signal, de façon à appliquer à chaque signal un traitement de relayage correspondant au type de ce signal.

2. Noeud selon la revendication 1 **caractérisé en ce que** des moyens (2) pour déterminer le type d'un signal comportent :
- deux filtres passe-bande (21, 22) centrés respectivement sur les fréquences 2100Hz et 1100Hz, et recevant le signal dont le type est à déterminer ;
- un dispositif (23) de discrimination entre une tonalité à 2100Hz, une tonalité à 1100Hz, un silence, ou un autre signal ; ce dispositif étant couplé à des sorties des deux filtres passe-bande (21, 22) ;
- un dispositif (24) d'analyse de signaux, qui est couplé au dispositif (23) de discrimination, pour : déterminer si une impulsion de tonalité a une durée comprise dans un intervalle prédéterminé ; analyser une tonalité à 2100 Hz pour détecter la présence ou l'absence d'une modulation d'amplitude à 15 Hz, et pour détecter des sauts de phase de ± 180° ;
- et un dispositif de décision (25) pour choisir le type du signal en fonction : de l'amplitude du signal en sortie de chacun des filtres (21, 22), et du résultat de l'analyse de signaux par le dispositif (24) d'analyse de signaux.
